# EUROPEAN PATENT SPECIFICATION

(11) **EP 1 664 897 B1**
(45) Date of publication and mention of the grant of the patent: **25.05.2011**
(21) Application number: 04738017.5
(22) Date of filing: 28.07.2004
(51) Int. Cl.: G02B 26/08, G02B 27/00, B41J 2/465

(54) **NON-UNIFORM LIGHT VALVE**
UNGLEICHFÖRMIGES LICHTVENTIL
MODULATEUR DE LUMIERE NON UNIFORME

(30) Priority: 29.07.2003 US 628887
(43) Date of publication of application: 07.06.2006
(73) Proprietor: Kodak Graphic Communications Canada Company, Burnaby, BC V5G 4M1 (CA)
(72) Inventor: GELBART, Daniel, Vancouver, British Columbia V6T 1B4 (CA)
(74) Representative: Wagner & Geyer
(86) International application number: PCT/CA2004/001410
(87) International publication number: WO 2005/012976

(56) References cited:
- US-A- 5 049 901
- US-A1- 2003 124 463
- US-B1- 6 301 000
- US-B1- 6 728 023
- US-B1- 6 728 023
- US-B2- 6 480 324

## Description

### Technical Field

The invention relates to imaging systems. Particular embodiments of the invention provide light valves for use in imaging systems.

### Background

Fabrication processes for displays, polymer-based semiconductor devices and other semiconductor devices typically involve a relatively large number of imaging steps. In conventional photolithographic imaging processes, each imaging step involves: coating a substrate with a resist (or other sensitive material); exposing the coated substrate to radiation through a photo-tool mask to cause a corresponding change in the resist; and subjecting the exposed material to a development process.

There is commonly a finite risk of failure associated with each imaging step. For fabrication processes involving a number of imaging steps, the risk of failure is compounded, thus reducing the overall process yield and increasing cost of the finished product. Fabrication of color filters for flat panel displays (e.g. liquid crystal displays (LCD's)) represents a specific example of a multi-step fabrication process. Color filter fabrication can be a very expensive process because of the high cost of materials and low process yield.

Direct imaging has been proposed for use in the fabrication of displays and in particular color filters. US Patent 4,965,242 to DeBoer et al. describes a direct imaging dye transfer process for making color filter elements, wherein a dye receiving element is overlaid with a dye donor element which is then imagewise heated to selectively transfer the dye from the donor element to the receiving element. The preferred method of imagewise heating is by means of a laser beam. Diode lasers are particularly preferred for their ease of modulation, low cost and small size.

A drawback with the DeBoer et al. direct imaging technique is that the laser beam is required to scan over the entire surface of the substrate in order to effect an imagewise dye transfer. Such an imagewise scan takes a relatively long time when compared to flood exposure through a photo-tool mask, wherein a small substrate may be exposed at once, or wherein a larger substrate may be exposed using a series of quick step and repeat exposures.

Document US 2003-A1-0124463 furthermore proposes to split the pattern of the image into small and large areas in order to increase speed. The small areas and the large areas are sequentially scanned with use of different optical sources.

One way to increase the speed of direct imaging involves simultaneously scanning the substrate with a plurality of independently modulatable laser beams. US Patent 6,146,792 to Blanchet-Fincher et al. describes the production of a durable image on a receiver element, such as a color filter. The laser head suggested by Blanchet-Fincher et al. includes thirty-two 830 nm laser diodes, each having approximately 90 mW of single-mode output.

Independently modulatable laser beams are often referred to in the art as "channels". Imaging heads with even more channels are now commonly available. An example of such an imaging head is the SQUAREspot^{®} thermal imaging head manufactured by Creo Inc. of Burnaby, British Columbia, Canada. This imaging head is available with up to 240 independently modulatable channels, each channel having upwards of 100 mW of optical output power. For a media sensitivity of 450 mJ/cm², this imaging head is capable of imaging a small 370 x 470 mm color filter substrate in around 3 minutes.

Further improvements in imaging speed have been impeded by the trade-off between imaging resolution and speed. Fabricating color filters having desirable edge definition characteristics (i.e. high resolution) requires imaging with a correspondingly small pixel size (i.e. the beam associated with each channel must be focused to have correspondingly small dimensions). However, when imaging with smaller pixel sizes, it takes longer to effect the imagewise exposure over a desired imaging area, because it takes longer scan the imaging head over the substrate to completely cover the desired imaging area. Simply adding more channels to an imaging head does not entirely address this problem, since it is difficult to provide such an imaging head in an economical and practical imaging system.

There is a general trend in the display fabrication industry toward processing larger substrates. Larger substrates may be used to create larger displays. In addition, larger substrates may be processed and then later separated into smaller panels to increase the economy and yield associated with the fabrication of smaller displays. For example, if there are two defects on a four panel substrate, then the yield may be 50%, while the same two faults on a 12 panel substrate represent an 83 % yield.

In the display fabrication industry, the substrate size of the so-called "sixth generation" flat panel display is around 1500 x 1800 mm. For a substrate this size with a media sensitivity of 450 mJ/cm², the 240 channel SQUAREspot^{®} thermal imaging head discussed above would have an imaging time in the vicinity of 45 minutes, which is prohibitively long.

There remains a need for higher productivity direct imaging techniques for use in various fabrication processes.

### Summary of the Invention

A first aspect of the invention provides a light valve for use in an imaging system as specified in claim 1.

One or more high resolution channels may be located adjacent to a low resolution channel on either or both sides thereof.

One or more of the uniformly spaced light valve elements may not be electrically coupled to either a low resolution channel or a high resolution channel.

The channels may comprise low resolution group(s) of light valve elements having low resolution number(s) of individual light valve elements coupled to be driven by low resolution driver(s) and high resolution group(s) of light valve elements having high resolution number(s) of individual light valve elements coupled to be driven by high resolution driver(s). The low resolution group(s) may generate corresponding low resolution channel(s) on a substrate to be imaged and the high resolution group(s) may generate high resolution channel(s) on the substrate to be imaged. The low resolution channel(s) may be larger than the high resolution channel(s). The low resolution number(s) may be selected such that a size of the low resolution channel(s) corresponds to a size of an interior portion of feature(s) in the pattern to be imaged. The high resolution number(s) may be selected such that a size of the high resolution channel(s) is/are sufficiently small to meet edge resolution requirement(s) of the in the pattern to be imaged. One or more high resolution channels may be located adjacent to a low resolution channel on either or both sides thereof.

The light valve may comprise additional groups of light valve elements which may be spaced apart from the low resolution and high resolution groups. The spacing may be selected to correspond with a separation between features in the pattern to be imaged. The light valve may be a part of an imaging head used for imaging color elements on a color filter substrate. The light valve may be a silicon nitride ribbon-based light valve, a PLZT light valve, a TIR light valve or a grating light valve. The individual light valve elements may be mirror elements having electronically alterable reflective characteristics, lens elements having electrically alterable refractive characteristics or grating elements having electronically alterable transmission characteristics.

Another aspect of the invention provides an imaging system for imaging a regular pattern of features onto a substrate according to claim 15.

Another aspect of the invention provides a method for imaging a regular pattern of features onto a substrate with a multi-channel imaging head according to claim 16.

Yet another aspect of the invention provides a method for fabricating a light valve for imaging a pattern of features with a multi-channel imaging system according to claim 21.

Still another aspect of the invention provides a light valve for use in an imaging system according to claim 1.

Further features and applications of specific embodiments of the invention are described below.

### Brief Description of the Drawings

In drawings which depict non-limiting embodiments of the invention:
FIG. 1 is a perspective representation of an optical system for a prior art imaging head;
FIG. 2-A is a plan view of a portion of a color filter having a stripe pattern of color elements;
FIG. 2-B is a plan view of a portion of a color filter having a mosaic pattern of color elements
FIG. 3-A is a schematic view of the non-uniform channel pattern of a light valve in accordance with a particular embodiment of the invention, together with the image created by the light valve on the substrate during a part of an imaging process;
FIG. 3-B is a schematic view of the FIG. 3-A non-uniform channel pattern, together with the image created by the light valve on the substrate during a subsequent part of the FIG. 3-A imaging process; and
FIG. 4 is a perspective view of a light valve according to a particular embodiment of the present invention.

### Detailed Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

The invention relates to imaging systems. Particular embodiments of the invention provide light valves for use in imaging systems. Such light valves are capable of generating a plurality of individually modulatable channels. Two or more of the channels have different (non-uniform) sizes. The non-uniform sizes of the channels are selected to correspond with a regular pattern to be imaged. Light valves according to particular embodiments of the invention comprise at least one low resolution group of light valve elements having a low resolution number of individual light valve elements coupled to be independently driven by a low resolution driver and at least one high resolution group of light valve elements having a high resolution number of individual light valve elements coupled to be independently driven by a high resolution driver. The low resolution number and the high resolution number are different from one another so as to generate low resolution and high resolution channels having different (non-uniform) sizes. Other embodiments of the invention provide imaging heads and imaging systems which incorporate such light valves and methods for fabricating and using such light valves.

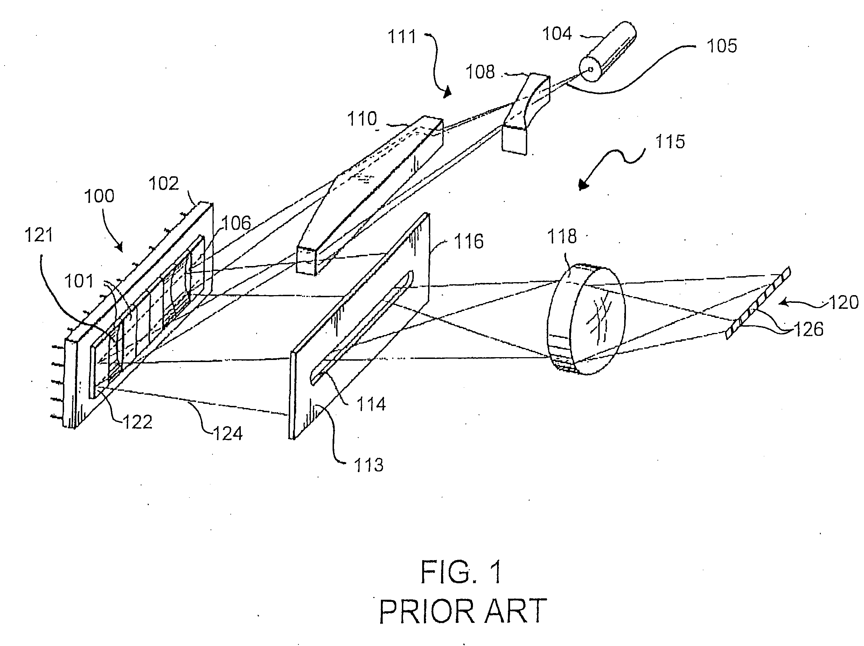

FIG. 1 is a representation of the optical system of an imaging head **115** which incorporates a prior art light valve **100**. Light valve **100**, which is fabricated on a silicon substrate **102**, comprises a plurality of deformable ribbon elements **101**. In the illustrated embodiment, each ribbon element **101** comprises a silicon nitride ribbon suspended over a cavity (not shown). Each ribbon element **101** is also coated with a reflective, metallic material, such as aluminum for example, which functions as both a reflecting surface and an electrode. The back side of light valve **100** comprises a common electrode (not shown), which is typically connected to ground.

A driver circuit (not shown) is typically associated with each ribbon element **101** for selectively applying a voltage thereto. In the Figure 1 illustration, ribbon element **121** represents an example of an actuated ribbon element. The driver associated with mirror **121** has applied a voltage to the electrode of ribbon element **121**, creating an electrostatic force ribbon element **121** and the common electrode on the back side of light valve **100**. This electrostatic force causes ribbon element **121** to deform into the cavity and to create a curved reflective surface as shown. Ribbon element **123** represents an example of a non-actuated ribbon element. Since there is no voltage applied to the electrode of ribbon element **123**, it is not deformed into the cavity and maintains a flat reflective surface as shown.

Imaging head **115** also comprises a laser **104** and an anamorphic beam expander **111**. Radiation **105** from laser **104** may be of a wide range of wavelengths, from ultra violet through infrared. Anamorphic beam expander **111** includes a pair of cylindrical lenses **108, 110**. Beam expander **111** and laser **104** are configured such that when radiation **105** from laser **104** is directed into beam expander **111**, an illumination line **106** (shown as a broken line in Figure 1) is generated on light valve **100**. In the illustrated embodiment, illumination line **106** stretches across all of the ribbon elements **101** in light valve **100**, such that each of ribbon elements **101** receives some of the radiation from illumination line **106**. The process of creating illumination line **106** on light valve **100** is described in United States Patent No. 5,517,359.

Imaging head **115** also comprises a stop **116** and an imaging lens **118**. Stop **116** has a transmitting region **114** and a non-transmitting region **113**. The radiation from illumination line **106** is reflected from ribbon elements **101** of light valve **100**. When a particular ribbon element (for example, ribbon element **121**) is deformed by the application of a voltage, its curved mirror surface focuses the reflected radiation, such that the reflected radiation travels through transmitting region **114** toward lens **118**. In contrast, when a particular ribbon element (for example, ribbon element **122**) is not deformed, its flat mirror surface causes the reflected radiation to be dispersed and blocked by non-transmitting region **113**.

Imaging lens **118** images light valve **100** to form an imaging swath **120**. Imaging swath **120** comprises a plurality of individually modulated beams or channels **126**. A substrate (not shown) may be located relative to imaging lens **118** such that imaging swath **120** is focused onto the substrate. Imaging swath **120** may be scanned over the desired imaging area of the substrate to form an image thereon. If a particular ribbon element **101** is actuated, then radiation reflected from its surface will pass through transmitting region **114** and its corresponding channel **126** will contain a sufficient amount of radiation to alter the substrate. Conversely, if a particular ribbon element **101** is not actuated, then a substantial amount of the radiation reflected from its surface will be blocked by non-transmitting region **113** and its corresponding channel **126** will not contain a sufficient amount of radiation to substantially alter the substrate.

Further details of the operation of imaging head **115** and light valve **100** are described in United States Patent No. 6,147,789.

Particular embodiments of the invention described herein provide light valves for use in imaging heads, such as imaging head **115**. The light valves of the present invention may be used in the place of light valve **100** for example.

When fabricating color filters for display panels (or when imaging other rigid substrates), imaging heads, such as imaging head **115**, are typically used in flatbed imaging devices (also referred to as a "flatbed scanners"). Using a flatbed imaging device typically involves securing the substrate in a flat orientation and then moving the substrate, the imaging head and/or a combination of the substrate and the imaging head relative to one another to effect the scan. Scanning typically involves relative movement between the imaging head and the substrate in a first direction (referred to as the "main scan direction"). Scanning may also involve stepping the imaging head relative to the substrate (or vice versa) in a second direction (referred to as the "sub-scan direction") and then moving the imaging head relative to the substrate (or vice versa) in the main scan direction again. This process may be repeated until the desired imaging area of the substrate is completely imaged. A high speed flatbed scanner suitable for use with the present invention is disclosed in United States Patent Publication No. 2004/0004122.

Flexible substrates may be secured to the internal or external surface of a drum for imaging in a drum-based imaging device. Typically, such drums are cylindrical in shape. Scanning is effected by rotating the drum about is axis, such that the substrate moves in a main scan direction relative to the imaging head. Scanning may also involve stepping the imaging head relative to the drum and the substrate (or vice versa) in a sub-scan direction and then rotating the drum to create relative movement in the main scan direction again. As with the flatbed scanner, this process may be repeated until the desired imaging area of the substrate is completely imaged. Drum-based imaging systems may be used to image substrates that are traditionally thought of as rigid. For example, a glass substrate may be imaged on a drum scanner provided that the substrate is sufficiently thin and the diameter of the drum is sufficiently large.

As discussed briefly above, a light valve typically comprises a driver circuit for each of its ribbon elements. For many light valves, the need for drivers represents a limiting factor with regard to how many ribbon elements the light valve may accommodate. For example, the number of drivers associated with a light valve is typically restricted by: spatial limitations associated with providing a large number of drivers in close proximity to the light valve; heat removal limitations associated with the removal of heat generated by the switching of the driver circuitry; and/or connection limitations associated with making the electrical connections between the drivers and their associated ribbon elements. These limitations also create corresponding restrictions on the number of channels that may be simultaneously imaged by a light-valve based printing head.

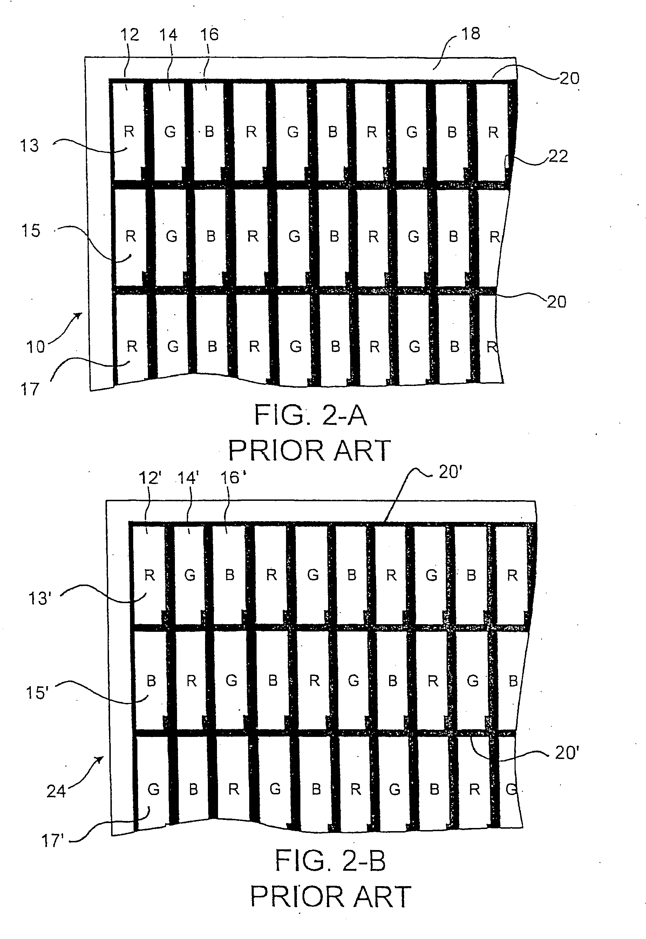

Fabrication of color filters for display panels may involve imaging color elements having various different spatial patterns. One particular pattern referred to as a "stripe pattern" is shown in color filter **10** of FIG. 2-A. Color filter **10** comprises a substrate **18** which has been imaged with alternating elongated stripes (columns) **12, 14, 16** of red color elements **R,** green color elements **G** and blue color elements **B**. The individual color elements **R, G, B** are bounded by an opaque matrix layer **20**. In the FIG. 2-A illustration, matrix layer **20** outlines a two-dimensional matrix pattern of individual color elements **R, G, B**, wherein columns **12, 14, 16** of color elements have a single color and rows **13, 15, 17** of color elements have alternating colors. Matrix **20** prevents the backlight typically used in flat panel displays from leaking between the color elements. In the illustrated embodiment, matrix layer **20** also comprises an area **22** for masking the circuitry (typically, thin film transistors (TFT's)) associated with color filter **10**.

FIG. 2-B shows a color filter **24** having a different spatial pattern of color elements **R, G, B** referred to as a "mosaic pattern". The mosaic configuration of color filter **24** comprises a two-dimensional matrix pattern of individual color elements **R, G, B**, wherein both the columns **12', 14', 16'** and rows **13', 15', 17'** of color elements have alternating colors. The mosaic pattern of color filter **24** may provide an improved color mix relative to the stripe pattern of color filter **10**. Other aspects of color filter **24** are similar to those of color filter **10**.

Color filters may also be fabricated in a "delta pattern" (not shown). In a delta pattern, the color elements are formed in a spatial pattern wherein the red, green and blue color elements have a triangular relationship to each other. Color filters fabricated with a delta pattern may provide an improved color mix relative to the stripe pattern of color filter **10** and the mosaic pattern of color filter **24**.

In one type of imaging system suitable for fabricating color filters for use in flat panel displays, a dye donor element is placed in close proximity to a dye receiving substrate. An imaging head provides laser radiation and is scanned across the surface of the substrate, causing dye from the donor element to be imagewise transferred to the receiving substrate. The red, blue and green portions of the color filter may be imaged in separate steps, with each step having a different colored dye donor element. The imaging head of this type of imaging system may comprise a multi-channel light valve in accordance with the present invention.

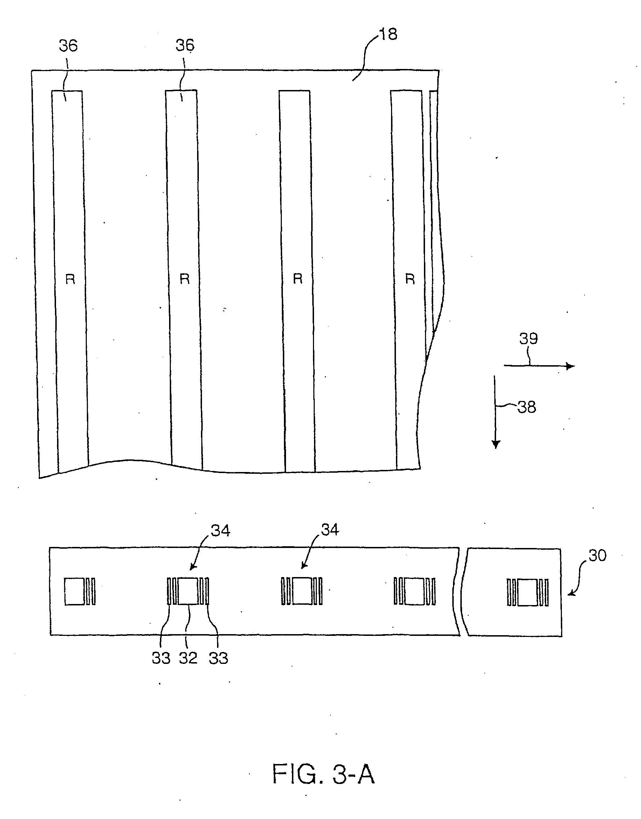

Particular embodiments of the invention comprise light valves capable of generating a plurality of individually modulatable channels, wherein two or more of the channels have different (non-uniform) sizes. FIG. 3-A schematically depicts a channel pattern **30** of a light valve in accordance with a particular embodiment of the invention. The light valve is configured to generate a non-uniform channel pattern **30**, which is selected to correspond with the spatial pattern being imaged. For example, light valves according to the invention are capable of generating spaced apart groups of channels **34**, low resolution (i.e. larger dimension) channels **32** and high resolution (i.e. smaller dimension) channels **33**. In the embodiment of FIG. 3-A, non-uniform channel pattern **30** comprises a plurality of spaced apart groups of channels **34**, each group **34** comprising one low resolution channel **32** and two high resolution channels **33** located on either side of the low resolution channel **32**. It will be appreciated that the groups of channels **34** and the distribution of low resolution channels **32** and high resolution channels **33** within each group **34** are arranged to correspond with a striped spatial pattern being imaged on substrate **18**.

FIG. 3-A schematically depicts the application of red stripes **36** to substrate **18**. In the illustrated embodiment, groups **34** of channels are spaced apart from one another at distances which correspond to the separation of stripes **36**, although (as explained further below) this spacing is not necessary. Within each group **34**, low resolution channels **32** correspond to the interior portion (distal to the edges) of stripes **36** and high resolution channels **33** correspond to the edges of stripes **36**. Low resolution channels **32** permit imaging of a relatively large interior portion of stripes **36**, while high resolution channels **33** ensure that stripes **36** have good edge definition. In particular, the inclusion of high resolution channels **33** allows the width of stripes **36** to be precisely adjusted to suit the media (i.e. substrate **18**) or other conditions which may affect the width of image stripes **36** on substrate **18**. Moreover, the combination of low resolution channels **32** and high resolution channels **33** allows the benefit of imaging with a fixed mask light valve while still providing the flexibility to adjust the resultant image pattern within some range.

In the FIG. 3-A embodiment, stripes **36** are imaged onto substrate **18** by scanning channel pattern **30** in the main scan direction indicated by arrow **38**. After each pass in the main scan direction **38**, channel pattern **30** is stepped relative to substrate **18** in the sub-scan direction indicated by arrow **39.** A new pass in the main scan direction **38** is then be commenced and the process is repeated until the entire desired area of substrate **18** is imaged.

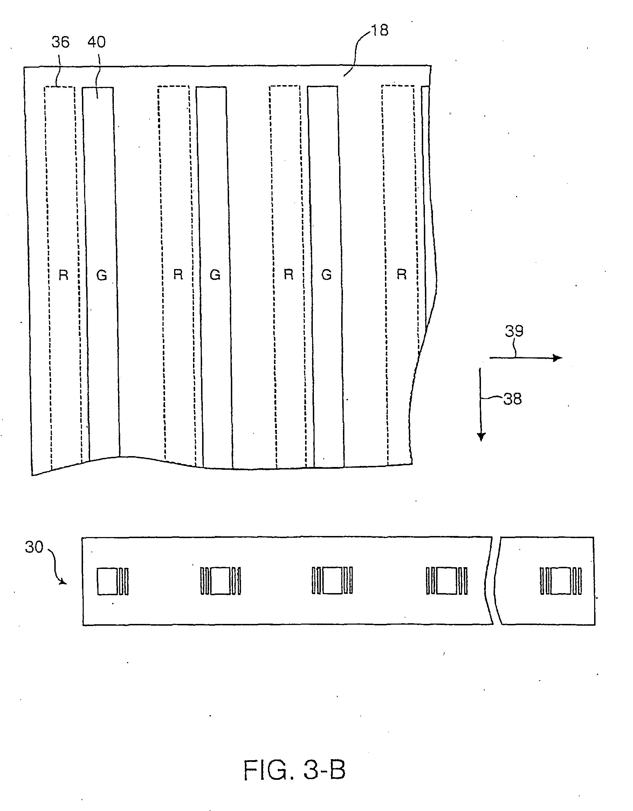

FIG. 3-B schematically depicts the imaging of green stripes **40** after red stripes **36** were imaged in a previous part of the process (FIG. 3-A). FIG. 3-B shows that the start position of channel pattern **30** is offset in sub-scan direction **39** relative to the start position for imaging red stripes **36**, so as to coincide with the intended location of green stripes **40**. In other respects, imaging of green stripes **40** is substantially similar to imaging red stripes **36**. In a substantially similar process, blue stripes (not shown) may be imaged after green stripes **40**.

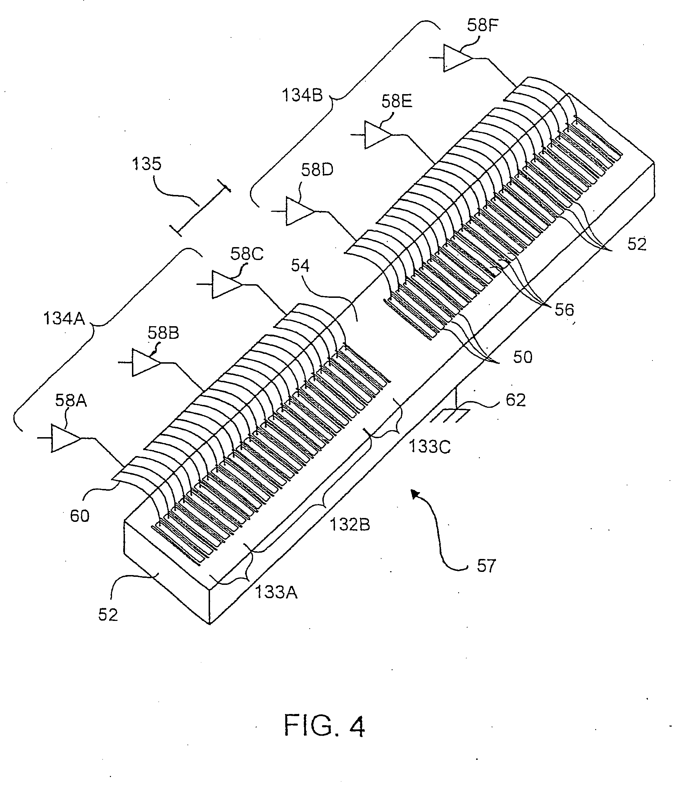

FIG. 4 depicts a light valve **57** according to a particular embodiment of the invention. Light valve **57** is configured to generate channel patterns similar to channel pattern **30** of FIG. 3-A and FIG. 3-B. Light valve **57** of the FIG. 4 embodiment comprises a plurality of silicon nitride ribbon elements **50** formed on a silicon substrate **52**. A slot corresponding to each ribbon element **50** is etched into upper surface **54** of substrate **52**. The substrate material is also etched away from under ribbon elements **50**, leaving ribbon elements **50** suspended over a cavity (not shown) in substrate **52**. Each ribbon element **50** is coated with a metallic material **56**, which acts as both an electrode and a reflective layer. Light valve **57** also comprises a common electrode **62** on the underside of substrate **52**, which is connected to a system ground.

Light valve **57** comprises a plurality of wire-bond connections **60**, each of which is coupled to the electrode **56** of a corresponding ribbon element **50**. Light valve **57** also comprises a plurality of drivers **58**, which are electrically coupled to wire-bond connections **60**. In the illustrated embodiment, each driver **58** is electrically coupled to a group of connections **60** and to a corresponding group of ribbon elements **50**. Advantageously, various groups of ribbon elements in light valve **57** contain different (non-uniform) numbers of individual ribbon elements **50**. For example, group **133A** comprises 4 individual ribbon elements **50** which are all electrically coupled to driver **58A**, group **132B** comprises 16 individual ribbon elements **50** which are all electrically coupled to driver **58B** and group **133C** comprises 4 individual ribbon elements **50** which are all electrically coupled to driver **58C**.

Operation of light valve **57** is similar to that of light valve **100** depicted (FIG. 1) and described above and further detailed in United States Patent No. 6,147,789. When a voltage is applied to the electrode **56** of a ribbon element **50**, an electrostatic force between electrode **56** and common electrode **62** causes the associated ribbon element **50** to deform into the cavity, thereby forming a curved mirror. As discussed above, when a ribbon element is deformed in this manner, radiation incident on its reflective surface is focused and may consequently be transmitted through the transmitting region of a stop to thereby image a substrate.

In accordance with the present invention, however, groups of light valve elements having non-uniform numbers of individual light valve elements may be simultaneously actuated by a single driver. For example, driver **58A** may cause a voltage to be applied to the electrodes **56** of the 4 individual ribbon elements **50** in group **133A**, causing the individual ribbon elements **50** in group **133A** to deform. Similarly, driver **58B** may independently cause a voltage to be applied to the electrodes **56** of the 16 individual ribbon elements **50** in group **132B**, causing the ribbon elements in group **132B** to deform.

Light valve **57** may be used in an imaging head (e.g. imaging head **115** of FIG. 1) to generate a channel pattern having high resolution channels and low resolution channels similar to the high resolution channels **33** and low resolution channels **32** of channel pattern **30** (FIG. 3-A). Those skilled in the art will appreciate that groups of ribbon elements having smaller numbers of individual ribbon elements **50** (e.g. groups **133A, 133C**) may be used to generate high resolution channels and that groups of ribbon elements having larger numbers of individual ribbon elements **50** (e.g. group **132B**) may be used to generate low resolution channels. Each group of ribbon elements **50** connected to a single driver **58** may be referred to as a channel of light valve **57**. Accordingly, it may be said that light valve **57** comprises a plurality of non-uniform channels, wherein smaller (high resolution) channels of light valve **57** correspond to groups of ribbon elements having smaller numbers of individual ribbon elements **50** and wherein larger (low resolution) channels of light valve **57** correspond to groups of ribbon elements having larger numbers of individual ribbon elements **50**.

Depending on the resolution requirements, the media being imaged, the patterns being imaged and the size of the individual ribbon elements, light valve **57** may comprise channels (i.e. groups of ribbon elements) having larger or smaller numbers of individual ribbon elements **50** or even a single individual ribbon element **50**. Each such group of ribbon elements may be independently actuated by a single driver.

Light valves according to the invention may be configured such that the spatial arrangement of the various groups of light valve elements and the number of individual light valve elements within each group of light valve elements may be selected to correspond to the spatial pattern being imaged. For example, light valve **57** of FIG. 4 incorporates groups of ribbon elements **133A, 133C** having a relatively small number of individual ribbon elements **50**, which are located on the outsides of a group of ribbon elements **132B** having a relatively large number of individual ribbon elements **50**. This arrangement of groups is capable of generating smaller high resolution channels located on the outsides of a larger low resolution channel, which, as discussed above, is well suited for imaging a stripe pattern, such as the stripe pattern of FIG. 2-A and stripes **36, 40** in FIG. 3-A and FIG. 3-B. Those skilled in the art will appreciate that this same arrangement of groups of ribbon elements is also well suited for imaging a mosaic pattern such as the mosaic pattern of FIG. 2-B.

Light valves according to the invention may also comprise channels (i.e. groups of light valve elements) that are spaced apart from one another to further correspond with the spatial pattern being imaged. For example, light valve **57** comprises groups of ribbon elements **134A, 134B,** which are spaced apart from one another by a distance **135**. This spaced apart arrangement of groups of ribbon elements is capable of generating correspondingly spaced apart groups of non-uniformly sized channels, such as groups **34** of FIG. 3-A. As discussed above, such spaced apart groups **34** of non-uniformly sized channels are well suited for imaging a pattern having pluralities of spaced apart features, such as the spaced apart stripes **36, 40** of FIG. 3-A and FIG. 3-B. Those skilled in the art will appreciate that the spacing between groups of ribbon elements may also be non-uniform.

The non-uniform configuration of light valve **57** comprises a relatively small number of drivers **58** for the resolution which it is capable of providing. More specifically, groups of ribbon elements having relatively large numbers of individual ribbon elements **50** (i.e. groups of ribbon elements corresponding to low resolution channels) are connected to a single driver. Thus, for imaging particular patterns, such as the stripe pattern of FIG. 3-A, light valve **57** is capable of providing the resolution associated with the groups of ribbon elements having small numbers of individual ribbon elements **50** (i.e. groups of ribbon elements corresponding to high resolution channels), but with a smaller number of drivers. Because of this reduced number of drivers, light valves according to the invention are less restricted by driver-based limitations, such as spacing requirements, heat removal requirements and electrical connection requirements.

The particular configuration of light valve **57** (i.e. having one or more high resolution channels **133A, 133C** on the outsides of a low resolution channel **132B**) represents merely one illustrative example of a non-uniform light valve according to the invention. As discussed above, light valve **57** is well suited for imaging the stripe pattern of FIG. 2-A and the mosaic pattern of FIG. 2-B. Those skilled in the art will appreciate that the use of light valves having non-uniform channels (i.e. groups of light valve elements with non-uniform numbers of individual light valve elements) may be used to generate a variety of different channel patterns and is not limited to the stripe patterns discussed herein. In recognizing the regularity of features in certain imaging patterns, light valves according to the invention offer improved imaging performance for a given number of light valve elements and a given number of drivers. In accordance with the invention, non-uniform light valves comprising individually modulatable groups of light valve elements having non-uniform numbers of individual light valve elements can be used wherever the spatial pattern to be imaged comprises recognizable pattern of low resolution features.

Embodiments of the present invention are generally applicable to any imaging systems comprising multi-channel light valves. In addition, embodiments of the present invention are applicable not only to methods of fabricating color filters for flat panel displays, but also to many other processes involving imaging. Non-limiting examples of other processes involving imaging include semiconductor device fabrication and biomedical imaging for Lab-on-a-chip fabrication.

As will be apparent to those skilled in the art in the light of the foregoing disclosure, many alterations and modifications are possible in the practice of this invention without departing from the scope of the appended claims. For example:
- In light valve **57** of the FIG. 4 embodiment, groups of ribbon elements **50** are fabricated in spaced apart locations corresponding to the pattern to be imaged. For example, group **134A** is fabricated in a location spaced apart from group **134B**. In alternative embodiments, light valves are fabricated to have a plurality of uniformly spaced ribbon elements and groups **134A, 134B** are subsequently formed by connecting desired ribbon elements to desired drivers and leaving other ribbon elements disconnected. For example, in a light valve having uniformly spaced ribbon elements, any ribbon elements located in space **135** may be left disconnected. In practice, many light valves are initially fabricated without connections and then connections are subsequently made by wire-bonding. Light valves of the present invention may thus be fabricated on a substrate and then configured by connecting various groups of light valve elements in accordance with the pattern (or range of similar patterns) to be imaged.
- In some embodiments, light valves according to the invention may comprise light valve elements having non-uniform size in addition to or as an alternative to groups of light valve elements having non-uniform numbers of individual light valve elements.
- Other light valve-based imaging heads are well known in the art. The light valves of these imaging heads employ a variety of alternative techniques to provide a plurality of individually modulatable channels which may be used to image a substrate. Non-limiting examples of alternative light valves include: PLZT (lead lanthanum zirconate titanate) light valves, such as those disclosed in United States Patent No. 5,517,359 for example; TIR (total internal reflection) light valves, such as those disclosed in United States Patent No. 6,169,565 for example; and grating light valves, such as those disclosed in United States Patent No. 5,661,592 for example. Those skilled in the art will appreciate that the present invention may be implemented using these or any other alternative types of light valves and in imaging systems incorporating these or any other alternative types of light valves.
- The particular embodiments of light valves described above comprise ribbon elements capable of deforming to form a curved mirror or a flat mirror. Those skilled in the art will appreciate that the invention may be applied to other types of light valves which comprise different light valve elements in the place of mirror-type ribbon elements. For example, light valves in accordance with the invention may comprise lens-type light valve elements or grating type light valve elements. Light valves according to the invention may incorporate any type of light valve elements.
- In the preferred embodiments described above, groups of light valve elements having non-uniform numbers of individual light valve elements are electrically coupled to a single driver. This is not necessary. In some embodiments, groups of light valve elements having non-uniform numbers of light valve elements are electrically coupled to a plurality of drivers. Such pluralities of drivers may be activated at the same time, so as to substantially simultaneously actuate the individual light valve elements in a group of light valve elements.
Accordingly, the scope of the invention is to be construed in accordance with the substance defined by the following claims.

## Claims

1. A light valve (57; 100) for use in an imaging system (115), the light valve comprising:
a plurality of uniformly spaced light valve elements (50), wherein at least a first and a second group of said light valve elements (50) are formed with the light valve elements in each group being electrically coupled to one another such that the light valve elements (50) of each group are actuatable by a single driver (58) to thereby form at least one low resolution channel (32; 132) and at least one high resolution channel (33; 133), wherein a number of light valve elements (50) electrically coupled to form the at least one low resolution channel (32; 132) is greater than a number of light valve elements (50) electrically coupled to form the high resolution channel (33; 133),
wherein each light valve element is drivable to focus a corresponding radiation beam to a transmitting region (114) of a stop (116) or to disperse the corresponding radiation beam, to be blocked by a non-transmitting region (112) of the stop (116), and
wherein the at least one low resolution channel (32; 132) and the at least one high resolution channel (33; 133) have sizes corresponding to a regular pattern to be imaged.

2. A light valve (57; 100) according to claim 1 wherein the number of light valve elements (50) chosen for the low resolution channel (32; 132) and the high resolution channel (33; 133) are selected to correspond to the pattern to be imaged.

3. A light valve (57; 100) according to claim 1 or 2, wherein the at least one low resolution channel (32; 132) corresponds to a feature in the pattern to be imaged.

4. A light valve (57; 100) according any one of claims 1 to 3, wherein the at least one high resolution channel (33; 133) corresponds to an edge of the feature in the pattern to be imaged.

5. A light valve (57; 100) according to any one of claims 1 to 3, comprising a plurality of low resolution channels (32; 132) corresponding to a plurality of features in the pattern to be imaged; and
a plurality of high resolution channels (33; 133) located adjacent to each low resolution channel (32; 132), the high resolution channels (33; 133) corresponding to edges of the features in the pattern to be imaged.

6. A light valve (57; 100) according to claim 5 comprising at least one high resolution channel (33; 133) located on each side of each low resolution channel (32; 132).

7. A light valve (57; 100) according to any one of the preceding claims, wherein one or more of the plurality of uniformly spaced light valve elements (50) are not electrically coupled to either a low resolution channel (32; 132) or a high resolution channel (33; 133).

8. A light valve (57; 100) according to any one of claims 1 to 7, wherein the light valve comprises a plurality of low resolution channels (32; 132) spaced apart so as to correspond with a plurality of spaced apart features in the pattern to be imaged.

9. A light valve (57; 100) according to claim 2 wherein the number of light valve elements (50) chosen for the low resolution channel (32; 132) is selected such that a size of the low resolution channel corresponds to a size of an interior portion of a feature in the pattern to be imaged.

10. A light valve (57; 100) according to claim 9 wherein the high resolution channel is located adjacent the low resolution channel and wherein the number of light valve elements (50) chosen for the high resolution channel (33; 133) is selected such that a size of the high resolution channel is sufficiently small to meet an edge resolution requirement of the pattern to be imaged.

11. A light valve (57; 100) according to any one of claims 1 to 10 comprising a at least a third group of light valve elements having a third number of individual light valve elements (50) electrically coupled to be driven by a third driver (58), the third group being spaced apart from first and second groups and a space between the third group and the first and second groups is selected to correspond with a separation between features in the pattern to be imaged.

12. A light valve (57; 100) according to any one of claims 1 to 11 wherein the light valve is a part of an imaging head used for imaging color elements on a color filter substrate.

13. A light valve (57; 100) according to any one of claims 1 to 12 wherein the light valve comprises one of: a silicon nitride ribbon-based light valve; a PLZT light valve; a TIR light valve; and a grating light valve.

14. A light valve (57; 100) according to any one of claims 1 to 13 wherein the individual light valve elements (50) comprise at least one of: mirror elements having electronically alterable reflective characteristics; lens elements having electrically alterable refractive characteristics; and grating elements having electronically alterable transmission characteristics.

15. An imaging system (115) for imaging a regular pattern of features onto a substrate, the imaging system comprising:
a light valve (57; 100) according to any one of the preceding claims ;
a radiation source for illuminating the light valve; and
a lens for imaging the light valve onto the substrate.

16. A method for imaging a regular pattern of features onto a substrate with a multi-channel imaging head, having at least a low resolution channel and a high resolution channel formed by a plurality of uniformly spaced light valve elements (50), wherein at least a first and a second group of said light valve elements (50) are electrically coupled to one another such that the light valve elements (50) of each group are actuatable by a single driver (58), to thereby form the at least one low resolution channel (32; 132) and the at least one high resolution channel (33; 133), wherein a number of light valve elements (50) electrically coupled to form the at least one low resolution channel (32; 132) is greater than a number of light valve elements (50) electrically coupled to form the high resolution channel (33; 133),
the method comprising:
analyzing the pattern to identify spatial characteristics of one or more features;
imaging an interior portion of each of the one or more features with a corresponding low resolution channel; and
imaging an edge portion of each of the one or more features with at least one corresponding high resolution channel, wherein the at least one corresponding high resolution channel has a smaller size than the corresponding low resolution channel.

17. A method according to claim 16, wherein imaging an interior portion and imaging an edge portion occur in a single pass of the imaging head relative to the substrate.

18. A method according to any one of claims 16 to 18, wherein analyzing the pattern comprises determining a dimension of the low resolution channel corresponding to each of the one of more features and determining a dimension of the at least one high resolution channel corresponding to each of the one or more features.

19. A method according to any one of claims 16 to 18, wherein the pattern of features comprises a regular pattern of color elements to be imaged on a color filter substrate and wherein imaging an interior portion and imaging an edge portion comprise sequentially imaging each color.

20. A method according to any one of claims 16 to 19, wherein imaging the interior portion and imaging the edge portion further comprise locating a dye donor element adjacent to the substrate and imagewise heating the dye donor element to transfer dye to the substrate.

21. A method for fabricating a light valve (57; 100) for imaging a pattern of features with a multi-channel imaging system, the method comprising:
analyzing the pattern of features to identify one or more spatial characteristics thereof, said spatial characteristics including at least a low resolution feature and a high resolution feature;
fabricating a plurality of uniform regularly spaced light valve elements on a light valve substrate; and
based on the spatial characteristics of the pattern of features:
electrically coupling a first number of light valve elements to one another, to be actuatable by a single first driver to form a low resolution channel; and
electrically coupling a second number of light valve elements to one another, to be actuatable by a single second driver, to form a high resolution channel,
wherein the first number of light valve elements (50) electrically coupled to form the at least one low resolution channel (32; 132) is greater than second number of light valve elements (50) electrically coupled to form the high resolution channel (33; 133).

## Patentansprüche

1. Ein Lichtventil (57; 100) zur Verwendung in einem Abbildungssystem (115), wobei das Lichtventil Folgendes aufweist:
eine Vielzahl von einheitlich beabstandeten Lichtventilelementen (50), wobei wenigstens eine erste und eine zweite Gruppe der Lichtventilelemente (50) mit den Lichtventilelementen in jeder Gruppe gebildet sind, die elektrisch so miteinander verbunden sind, dass die Lichtventilelemente (50) von jeder Gruppe durch einen einzigen Treiber (58) angesteuert werden können, um dabei wenigstens einen niedrig auflösenden Kanal (32; 132) und wenigstens einen hoch auflösenden Kanal (33; 133) zu bilden, wobei eine Anzahl von Lichtventilelementen (50), die elektrisch miteinander verbunden sind um den wenigstens einen niedrig auflösenden Kanal (32; 132) zu bilden, größer ist als eine Anzahl von Lichtventilelementen (50), die elektrisch miteinander verbunden sind, um den hochauflösenden Kanal (33; 133) zu bilden,
wobei jedes Lichtventilelement betrieben werden kann um ein entsprechendes Strahlungsbündel auf einen transmittierenden Bereich (114) einer Blende (116) zu fokusieren oder zum Streuen des entsprechenden Strahlungsbündels, um durch einen nicht-transmittierenden Bereich (112) der Blende (116) blockiert zu werden, und
wobei der wenigstens eine niedrig auflösende Kanal (32; 132) und der wenigstens eine hochauflösende Kanal (33; 133) Größen aufweisen, die einem wiederkehrendes Muster, das abgebildet werden soll, entsprechen.

2. Ein Lichtventil (57; 100) gemäß Anspruch 1, wobei die Anzahl von Lichtventilelementen (50), die für den niedrig auflösenden Kanal (32; 132) und den hoch auflösenden Kanal (33; 133) ausgewählt wurden, so ausgewählt sind, dass sie dem Muster, das abgebildet werden soll entsprechen.

3. Ein Lichtventil (57; 100) gemäß Anspruch 1 oder 2, wobei der wenigstens eine niedrig auflösende Kanal (32; 132) einem Merkmal in dem Muster, das abgebildet werden soll, entspricht.

4. Ein Lichtventil (57; 100) gemäß einem der Ansprüche 1 bis 3, wobei der wenigstens eine hoch auflösende Kanal (33; 133) einer Kante des Merkmals in dem Muster, das abgebildet werden soll, entspricht.

5. Ein Lichtventil (57; 100) gemäß einem der Ansprüche 1 bis 3, weist ferner eine Vielzahl von niedrig auflösenden Kanälen (32; 132) auf, die einer Vielzahl von Merkmalen in dem Muster, das abgebildet werden soll, entsprechen; und
eine Vielzahl von hoch auflösenden Kanälen (33; 133) die benachbart zu jedem niedrig auflösenden Kanal (32; 132) angeordnet sind, wobei die hoch auflösenden Kanäle (33; 133) Kanten der Merkmale in dem Muster, das abgebildet werden soll, entsprechen.

6. Ein Lichtventil (57; 100) gemäß Anspruch 5 weist wenigstens einen hoch auflösenden Kanal (33; 133) auf, angeordnet an jeder Seite jedes niedrig auflösenden Kanals (32; 132).

7. Ein Lichtventil (57; 100) gemäß einem der vorhergehenden Ansprüche, wobei eines oder mehr der Vielzahl von einheitlich beabstandeten Lichtventilelemente (50) nicht elektrisch mit entweder einem niedrig auflösenden Kanal (32; 132) oder einem hoch auflösenden Kanal (33; 133) verbunden ist.

8. Ein Lichtventil (57; 100) gemäß einem der Ansprüche 1 bis 7, wobei das Lichtventil eine Vielzahl von niedrig auflösenden Kanälen (32; 132) aufweist, die so beabstandet sind, dass sie einer Vielzahl von voneinander beabstandeten Merkmalen in dem Muster, das abgebildet werden soll, entsprechen.

9. Ein Lichtventil (57; 100) gemäß Anspruch 2, wobei die Anzahl von Lichtventilelementen (50), die für den niedrig auflösenden Kanal (32; 132) gewählt wurden, so ausgewählt wurde, dass eine Größe des niedrig auflösenden Kanals einer Größe eines inneren Teils eines Merkmals in dem Muster, das abgebildet werden soll, entspricht.

10. Ein Lichtventil (57; 100) gemäß Anspruch 9, wobei der hoch auflösende Kanal benachbart zu dem niedrig auflösenden Kanal angeordnet ist und wobei die Anzahl von Lichtventilelementen (50), die für den hoch auflösenden Kanal (33; 133) gewählt wurde, so ausgewählt wurde, dass eine Größe des hoch auflösenden Kanals genügend klein ist, um eine Kantenauflösungsanforderung des Musters, das abgebildet werden soll, zu erfüllen.

11. Ein Lichtventil (57; 100) gemäß einem der Ansprüche 1 bis 10 weist wenigstens eine dritte Gruppe von Lichtventilelementen auf, die eine dritte Anzahl von individuellen Lichtventilelementen (50) aufweist, die elektrisch verbunden sind, um durch einen dritten Treiber (58) betrieben zu werden, wobei die dritte Gruppe von der ersten und zweiten Gruppen beabstandet ist und ein Abstand zwischen der dritten Gruppe und der ersten und zweiten Gruppe so ausgebildet ist, dass er einer Beabstandung zwischen Merkmalen in dem Muster, das abgebildet werden soll, entspricht.

12. Ein Lichtventil (57; 100) gemäß einem der Ansprüche 1 bis 11, wobei das Lichtventil ein Teil eines Abbildungskopfes ist, der zum Abbilden von Farbelementen auf einem Farbfiltersubstrat verwendet wird.

13. Ein Lichtventil (57; 100) gemäß einem der Ansprüche 1 bis 12, wobei das Lichtventil eines der Folgenden aufweist: ein Silicium Nitrit Band basiertes Lichtventil; ein PLZT Lichtventil; ein TIR Lichtventil; und ein Gitter Lichtventil.

14. Ein Lichtventil (57; 100) gemäß einem der Ansprüche 1 bis 13, wobei die individuellen Lichtventilelemente (50) wenigstens eines der Folgenden aufweisen: Spiegelelemente, die elektronisch veränderbare Reflektionscharakteristiken aufweisen; Linsen Elemente, die elektronisch veränderbare Brechungscharakteristiken aufweisen; und Gitter Elemente, die elektronisch veränderbare Transmissions-Charakteristiken aufweisen.

15. Ein Abbildungssystem (115) zur Abbildung eines widerkehrenden Musters von Merkmalen auf einem Substrat, wobei das Abbildungssyste Folgendes aufweist:
ein Lichtventil (57; 100) gemäß einem der vorhergehenden Ansprüche;
eine Strahlungsquelle zum Beleuchten des Lichtventils; und
eine Linse zum Abbilden des Lichtventils auf dem Substrat.

16. Ein Verfahren zum Abbilden eines wiederkehrenden Musters von Merkmalen auf einem Substrat mit einem Multikanal Abbildungskopf, der wenigstens einen niedrig auflösenden Kanal und einen hoch auflösenden Kanal aufweist, die durch eine Vielzahl von einheitlich beabstandeten Lichtventilelementen (50) gebildet werden, wobei wenigstens eine erste und eine zweite Gruppe der Lichtventilelemente (50) so elektrisch miteinander verbunden sind, dass die Lichtventilelemente (50) von jeder Gruppe durch einen einzigen Treiber (58) ansteuerbar sind um **dadurch** den wenigstens einen niedrig auflösenden Kanal (32; 132) und den wenigstens einen hoch auflösenden Kanal (33; 133) zu bilden, wobei eine Anzahl von Lichtventilelementen (50), die elektrisch miteinander verbunden sind um den wenigstens einen niedrig auflösenden Kanal (32; 132) zu bilden, größer ist als eine Anzahl von Lichtventilelementen (50), die elektrisch miteinander verbunden sind, um den hoch auflösenden Kanal (33; 133) zu bilden, wobei das Verfahren Folgendes aufweist:
Analysieren des Musters, um räumliche Charakteristiken von einem oder mehreren Merkmalen zu identifizieren;
Abbilden eines inneren Teils von jedem der einen oder mehreren Merkmale mit einem entsprechenden niedrig auflösenden Kanal; und
Abbilden eines Kantenteils von jedem der einen oder mehreren Merkmale mit wenigstens einem entsprechenden hoch auflösenden Kanal, wobei der wenigstens eine entsprechende hoch auflösende Kanal eine kleinere Größe aufweist als der entsprechende niedrig auflösende Kanal.

17. Ein Verfahren gemäß Anspruch 16, wobei das Abbilden eines inneren Teils und das Abbilden eines Kantenteils in einem einzelnen Überstreichen des Abbildungskopfes, relativ zu dem Substrat, auftritt.

18. Ein Verfahren gemäß einem der Ansprüche 16 bis 18, wobei das Analysieren des Musters, das Bestimmen einer Dimension des niedrig auflösenden Kanals aufweist, entsprechend jedem der einen oder mehreren Merkmale und Bestimmen einer Dimension des wenigstens einen hochauflösenden Kanals entsprechend jedem der einen oder mehreren Merkmale.

19. Ein Verfahren gemäß einem der Ansprüche 16 bis 18, wobei das Muster von Merkmalen ein wiederkehrendes Muster von Farbelementen aufweist, die auf einem Farbfiltersubstrat abgebildet werden sollen und wobei das Abbilden eines inneren Teils und das Abbilden eines Kantenteils das sequenzielle Abbilden jeder Farbe aufweist.

20. Ein Verfahren gemäß einem der Ansprüche 16 bis 19, wobei das Abbilden des inneren Teils und das Abbilden des Kantenteils ferner das Anordnen eines Farb-Spenderelements, das benachbart zu dem Substrat ist, aufweist, und das abbildungsweise heizen des Farb-Spenderelements um Farbe auf das Substrat zu übertragen.

21. Ein Verfahren zum Herstellen eines Lichtventils (57; 100) zum Abbilden eines Musters von Merkmalen mit einem Multikanal Abbildungssystem, wobei das Verfahren Folgendes aufweist:
Analysieren des Musters von Merkmalen um eine oder mehrere räumliche Charakteristiken davon zu identifizieren, wobei die räumlichen Charakteristiken wenigstens ein niedrig auflösendes Merkmal und ein hoch auflösendes Merkmal aufweisen;
Herstellen einer Vielzahl von einheitlich wiederkehrend beabstandeten Lichtventilelementen auf einem Lichtventilsubstrat; und
basierend auf den räumlichen Charakteristiken des Musters von Merkmalen:
elektrisches miteinander Verbinden einer ersten Anzahl von Lichtventilelementen, um über einen einzelnen ersten Treiber betrieben zu werden, um einen niedrig auflösenden Kanal zu bilden; und elektrisches miteinander Verbinden einer zweiten Anzahl von Lichtventilelementen, um über einen einzelnen zweiten Treiber betrieben zu werden, um einen hoch auflösenden Kanal zu bilden,
wobei die erste Anzahl von Lichtventilelementen (50), die elektrisch miteinander verbunden sind, um den wenigstens einen niedrig auflösenden Kanal (32; 132) zu bilden, größer ist als die zweite Anzahl von Lichtventilelementen (50), die elektrisch miteinander verbunden sind, um den hoch auflösenden Kanal (33; 133) zu bilden.

## Revendications

1. Modulateur de lumière (57 ; 100) destiné à être utilisé dans un système de formation d'image (115), le modulateur de lumière comprenant :
une pluralité d'éléments de modulateur de lumière régulièrement espacés (50), où au moins un premier et un deuxième groupes desdits éléments de modulateur de lumière (50) sont formés avec les éléments de modulateur de lumière dans chaque groupe qui sont reliés électriquement à un autre de sorte que les éléments de modulateur de lumière (50) de chaque groupe puissent être actionnés par un seul circuit pilote (58) pour former de cette manière au moins un canal à basse résolution (32 ; 132) et au moins un canal à haute résolution (33 ; 133), où un nombre d'éléments de modulateur de lumière (50) reliés électriquement pour former le au moins un canal à basse résolution (32 ; 132) est supérieur à un nombre d'éléments de modulateur de lumière (50) reliés électriquement pour former le canal à haute résolution (33 ; 133),
dans lequel chaque élément de modulateur de lumière peut être commandé pour focaliser un faisceau de rayonnement correspondant sur une région de transmission (114) d'un diaphragme (116) ou pour disperser le faisceau de rayonnement correspondant, devant être bloqué par une région de non transmission (112) du diaphragme (116), et
dans lequel le au moins un canal à basse résolution (32 ; 132) et le au moins un canal à haute résolution (33 ; 133) ont des dimensions correspondant à un motif régulier devant être formé en image.

2. Modulateur de lumière (57 ; 100) selon la revendication 1, dans lequel les nombres d'éléments de modulateur de lumière (50) choisis pour le canal à basse résolution (32 ; 132) et le canal à haute résolution (33 ; 133) sont sélectionnés pour correspondre au motif devant être formé en image.

3. Modulateur de lumière (57 ; 100) selon la revendication 1 ou 2, dans lequel le au moins un canal à basse résolution (32 ; 132) correspond à une entité dans le motif devant être formé en image.

4. Modulateur de lumière (57 ; 100) selon l'une quelconque des revendications 1 à 3, dans lequel le au moins un canal à haute résolution (33 ; 133) correspond à un bord de l'entité dans le motif devant être formé en image.

5. Modulateur de lumière (57 ; 100) selon l'une quelconque des revendications 1 à 3, comprenant une pluralité de canaux à basse résolution (32 ; 132) correspondant à une pluralité d'entités dans le motif devant être formé en image, et
une pluralité de canaux à haute résolution (33 ; 133) situés à côté de chaque canal à basse résolution (32 ; 132), les canaux à haute résolution (33 ; 133) correspondant à des bords des entités dans le motif devant être formé en image.

6. Modulateur de lumière (57 ; 100) selon la revendication 5, comprenant au moins un canal à haute résolution (33 ; 133) situé de chaque côté de chaque canal à basse résolution (32 ; 132).

7. Modulateur de lumière (57 ; 100) selon l'une quelconque des revendications précédentes, dans lequel un ou plusieurs éléments de la pluralité d'éléments de modulateur de lumière régulièrement espacés (50) ne sont reliés électriquement ni à un canal à basse résolution (32 ; 132), ni à un canal à haute résolution (33 ; 133).

8. Modulateur de lumière (57 ; 100) selon l'une quelconque des revendications 1 à 7, dans lequel le modulateur de lumière comprend une pluralité de canaux à basse résolution (32 ; 132) espacés de manière à correspondre à une pluralité d'entités espacées dans le motif devant être formé en image.

9. Modulateur de lumière (57 ; 100) selon la revendication 2, dans lequel le nombre d'éléments de modulateur de lumière (50) choisi pour le canal à basse résolution (32 ; 132) est sélectionné de sorte qu'une dimension du canal à basse résolution corresponde à une dimension d'une partie intérieure d'une entité dans le motif devant être formé en image.

10. Modulateur de lumière (57 ; 100) selon la revendication 9, dans lequel le canal à haute résolution est situé à côté du canal à basse résolution et dans lequel le nombre d'éléments de modulateur de lumière (50) choisi pour le canal à haute résolution (33 ; 133) est sélectionné de sorte qu'une dimension du canal à haute résolution soit suffisamment petite pour respecter une exigence de résolution de bord du motif devant être formé en image.

11. Modulateur de lumière (57 ; 100) selon l'une quelconque des revendications 1 à 10, comprenant au moins un troisième groupe d'éléments de modulateur de lumière ayant un troisième nombre d'éléments de modulateur de lumière (50) reliés électriquement pour être attaqués par un troisième circuit pilote (58), le troisième groupe étant espacé des premier et deuxième groupes et un espace entre le troisième groupe et les premier et deuxième groupes est sélectionné pour correspondre à une séparation entre des entités dans le motif devant être formé en image.

12. Modulateur de lumière (57 ; 100) selon l'une quelconque des revendications 1 à 11, où le modulateur de lumière est une partie d'une tête de formation d'image utilisée pour former en image des éléments de couleur sur un substrat de filtre de couleur.

13. Modulateur de lumière (57 ; 100) selon l'une quelconque des revendications 1 à 12, où le modulateur de lumière comprend l'un de : un modulateur de lumière à base de ruban de nitrure de silicium, un modulateur de lumière PLZT, un modulateur de lumière TIR, et un modulateur de lumière de diffraction.

14. Modulateur de lumière (57 ; 100) selon l'une quelconque des revendications 1 à 13, dans lequel les éléments de modulateur de lumière individuels (50) comprennent au moins l'un des éléments suivants : des éléments de miroirs ayant des caractéristiques de réflexion modifiables électroniquement, des éléments de lentilles ayant des caractéristiques de réflexion modifiables électroniquement, et des éléments de diffraction ayant des caractéristiques de transmission modifiables électroniquement.

15. Système de formation d'image (115) destiné à former en image un motif régulier d'entités sur un substrat, le système de formation d'image comprenant :
un modulateur de lumière (57 ; 100) selon l'une quelconque des revendications précédentes,
une source de rayonnement destinée à illuminer le modulateur de lumière, et
une lentille destinée à former une image sur le modulateur de lumière sur le substrat.

16. Procédé destiné à former en image un motif régulier d'entités sur un substrat avec une tête de formation d'image à plusieurs canaux, ayant au moins un canal à basse résolution et un canal à haute résolution formés par une pluralité d'éléments de modulateur de lumière régulièrement espacés (50), où au moins un premier et un deuxième groupes desdits éléments de modulateur de lumière (50) sont reliés électriquement à un autre de sorte que les éléments de modulateur de lumière (50) de chaque groupe puissent être actionnés par un seul circuit pilote (58), pour former de cette manière le au moins un canal à basse résolution (32 ; 132) et le au moins un canal à haute résolution (33 ; 133), où un nombre d'éléments de modulateur de lumière (50) reliés électriquement pour former le au moins un canal à basse résolution (32 ; 132) est supérieur à un nombre d'éléments de modulateur de lumière (50) reliés électriquement pour former le canal à haute résolution (33 ; 133),
le procédé comprenant :
l'analyse du motif pour identifier des caractéristiques spatiales d'une ou plusieurs entités,
la formation en image d'une partie intérieure de chacune des une ou plusieurs entités avec un canal à basse résolution correspondant, et
la formation en image d'une partie de bord de chacune des une ou plusieurs entités avec un canal à haute résolution correspondant, où le au moins un canal à haute résolution correspondant a une dimension inférieure à celle du canal à basse résolution correspondant.

17. Procédé selon la revendication 16, dans lequel la formation en image d'une partie intérieure et la formation en image d'une partie de bord se produisent en une seule passe de la tête de formation d'image par rapport au substrat.

18. Procédé selon l'une quelconque des revendications 16 à 18, dans lequel l'analyse du motif comprend la détermination d'une dimension du canal à basse résolution correspondant à chacune des une ou plusieurs entités et la détermination d'une dimension du au moins un canal à haute résolution correspondant à chacune des une ou plusieurs entités.

19. Procédé selon l'une quelconque des revendications 16 à 18, dans lequel le motif d'entités comprend un motif régulier d'éléments de couleur devant être formés en image sur un substrat de filtre de couleur et dans lequel la formation en image d'une partie intérieure et la formation en image d'une partie de bord comprennent la formation en image de chaque couleur séquentiellement.

20. Procédé selon l'une quelconque des revendications 16 à 19, dans lequel la formation en image de la partie intérieure et la formation en image de la partie de bord comprennent en outre la localisation d'un élément donneur de colorant adjacent au substrat et le chauffage sur toute l'image de l'élément donneur de colorant pour transférer le colorant au substrat.

21. Procédé de fabrication d'un modulateur de lumière (57 ; 100) destiné à former en image un motif d'entités avec un système de formation d'image à plusieurs canaux, le procédé comprenant :
l'analyse du motif d'entités pour identifier une ou plusieurs caractéristiques spatiales de celles-ci, lesdites caractéristiques spatiales comprenant au moins une caractéristique à basse résolution et une caractéristique à haute résolution,
la fabrication d'une pluralité d'éléments de modulateur de lumière régulièrement espacés sur un substrat de modulateur de lumière, et
sur la base des caractéristiques spatiales du motif d'entités :
relier électriquement un premier nombre d'éléments de modulateur de lumière à un autre, pour pouvoir être actionnés par un seul premier circuit pilote pour former un canal à basse résolution, et
relier électriquement un deuxième nombre d'éléments de modulateur de lumière à un autre, pour pouvoir être actionnés par un seul deuxième circuit pilote, pour former un canal à haute résolution,
où le premier nombre d'éléments de modulateur de lumière (50) reliés électriquement pour former le au moins un canal à basse résolution (32 ; 132) est supérieur au deuxième nombre d'éléments de modulateur de lumière (50) reliés électriquement pour former le canal à haute résolution (33 ; 133).
